# EUROPÄISCHE PATENTSCHRIFT

(11) **EP 0 414 083 B1**
(45) Veröffentlichungstag und Bekanntmachung des Hinweises auf die Patenterteilung: **18.01.1995**
(21) Anmeldenummer: 90115464.1
(22) Anmeldetag: 11.08.1990
(51) Int. Cl.: C08G 64/04

(54) **Stabilisierte Polycarbonate**
Stabilized polycarbonates
Polycarbonates stabilisés

(30) Priorität: 25.08.1989 DE 3928155
(43) Veröffentlichungstag der Anmeldung: 27.02.1991
(73) Patentinhaber: BAYER AG, 51368 Leverkusen (DE)
(72) Erfinder: Fritsch, Karl-Herbert, Dr., D-5060 Bergisch Gladbach (DE); Westeppe, Uwe, Dr., D-4020 Mettmann (DE); Nouvertné, Werner, Dr., D-4150 Krefeld 11 (DE); Freitag, Dieter, Dr., D-4150 Krefeld 11 (DE)

(56) Entgegenhaltungen:
- EP-A- 0 166 834
- DE-A- 3 832 396
- US-A- 3 398 212
- US-A- 4 469 833

## Beschreibung

Gegenstand der Erfindung sind Copolycarbonate mit verbesserter Verarbeitungsstabilität. Insbesondere sind Gegenstand der Erfindung Copolycarbonate von bekannten Bisphenolen und kleinen Mengen von Dihydroxydiphenylcycloalkanen der Formel (I) 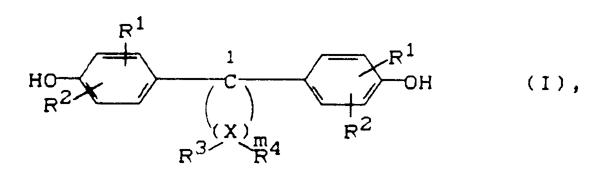
worin
- R¹ und R²: unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
- m: eine ganze Zahl von 4 bis 7, bevorzugt 4 oder 5,
- R³ und R⁴,: für jedes X individuell wählbar, unabhängig voneinander Wasserstoff oder C₁-C₆-Alkyl
und
- X: Kohlenstoff bedeuten,
mit der Maßgabe, daß an mindestens einem Atom X R³ und R⁴ gleichzeitig Alkyl bedeuten.

Bevorzugt sind an 1 bis 2 Atomen X, insbesondere nur an einem Atom X, R³ und R⁴ gleichzeitig Alkyl. Bevorzugter Alkylrest ist Methyl; die X-Atome in α-Stellung zu dem di-phenyl-substituierten C-Atom (C-1) sind bevorzugt nicht dialkylsubstituiert, dagegen ist die Alkyl-disubstitution in β-Stellung zu C-1 bevorzugt. Insbesondere sind Diphenole bevorzugt, in denen das x-Atom in β-Stellung alkyl-disubstituiert, das x-Atom in β′-Stellung monoalkylsubstituiert ist. Insbesondere sind Gegenstand der Erfindung Dihydroxydiphenylcycloalkane mit 5 und 6 Ring-C-Atomen im cycloaliphatischen Rest (m = 4 oder 5 in Formel (I)) wie beispielsweise die Diphenole der Formeln 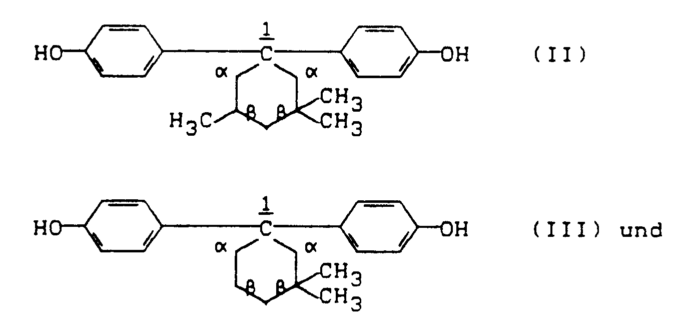 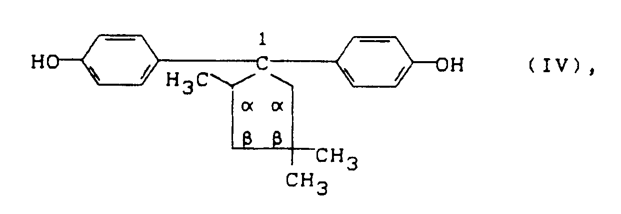
Besonders bevorzugt ist 1,1-Bis-(4-hydroxyphenyl)-3,3,5-trimethylcyclohexan (vgl. Formel II).

Die Dihydroxydiphenylcycloalkane der Formel (I) und Verfahren zu ihrer Herstellung sind in der älteren DE-A-3 832 396 beschrieben. Sie können in an sich bekannter Weise durch Kondensation von Phenolen der Formel (V) 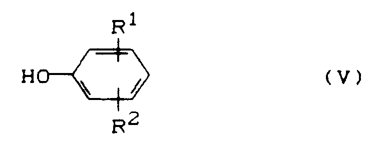
und Ketonen der Formel (VI) 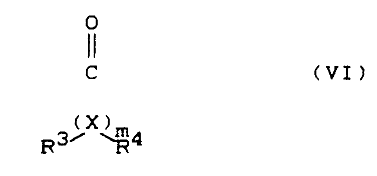
hergestellt werden, wobei in den Formeln (V) und (VI) X, R¹, R², R³, R⁴ und m die für Formel (I) angegebene Bedeutung haben. Die Phenole der Formel (V) sind bekannt oder nach bekannten Verfahren erhältlich (siehe beispielsweise für Kresole und Xylenole, Ullmanns Encyklopädie der technischen Chemie 4. neubearbeitete und erweiterte Auflage Band 15, Seiten 61 - 77, Verlag Chemie-Weinheim-New York 1978; für Chlorphenole, Ullmanns Encyklopädie der technischen Chemie, 4. Auflage, Verlag Chemie, 1975, Band 9, Seiten 573-582; und für Alkylphenole, Ullmanns Encyklopädie der technischen Chemie, 4. Auflage, Verlag Chemie 1979, Band 18, Seiten 191-214).

Beispiele für geeignete Phenole der Formel (V) sind:
Phenol, o-Kresol, m-Kresol, 2,6-Dimethylphenol, 2-Chlorphenol, 3-Chlorphenol, 2,6-Dichlorphenol, 2-Cyclohexylphenol, Diphenylphenol und o-Benzylphenol.

Die Ketone der Formel (VI) sind bekannt (siehe beispielsweise) Beilsteins Handbuch der Organischen Chemie, 7. Band, 4. Auflage, Springer-Verlag, Berlin, 1925 und die entsprechenden Ergänzungsbände 1 bis 4, und J. Am. Chem. Soc. Vol 79 (1957), Seiten 1488-1492, US-PS 2 692 289, Allen et al., J. Chem. Soc., (1959), 2186-2192 und J. Org. Chem. Vol. 38, (1973), Seiten 4431-4435, J. Am. Chem. Soc. 87, (1965), Seite 1353-1364. Ein allgemeines Verfahren zur Herstellung von Ketonen der Formel (VI) ist beispielsweise in "Organikum, 15. Auflage, 1977, VEB-Deutscher Verlag der Wissenschaften, Berlin, beispielsweise Seite 698, beschrieben.

Beispiele für bekannte Ketone der Formel (VI) sind:
3,3-Dimethylcyclopentanon, 3,3-Dimethylcyclohexanon, 4,4-Dimethylcyclohexanon, 3-Ethyl-3-Methylcyclopentanon, 2,3,3-Trimethylcyclopentanon, 3,3,4-Trimethylcyclopentanon, 3,3-Dimethylcycloheptanon, 4,4-Dimethylcycloheptanon, 3-Ethyl-3-methylcyclohexanon, 4-Ethyl-4-methylcyclohexanon, 2,3,3-Trimethylcyclohexanon, 2,4,4-Trimethylcyclohexanon, 3,3,4-Trimethylcyclohexanon, 3,3,5-Trimethylcyclohexanon, 3,4,4-Trimethylcyclohexanon, 2,3,3,4-Tetramethyl-cyclopentanon, 3,3,5-Trimethylcycloheptanon, 3,5,5-Trimethylcycloheptanon, 5-Ethyl-2,5-dimethylcycloheptanon, 2,3,3,5-Tetramethylcycloheptanon, 2,3,5,5-Tetramethylcycloheptanon, 3,3,5,5-Tetramethylcycloheptanon, 4-Ethyl-2,3,4-trimethylcyclopentanon, 2-Ethyl-3,5,5-trimethylcyclohexanon, 3-Ethyl-3,5,5-trimethylcyclohexanon, 3-Ethyl-4-isopropyl-3-methyl-cyclopentanon, 4-sec.-Butyl-3,3-dimethylcyclopentanon, 2-Isopropyl-3,3,4-trimethylcyclopentanon, 3-Ethyl-4-isopropyl-3-methyl-cyclohexanon, 4-Ethyl-3-isopropyl-4-methyl-cyclohexanon, 3-sec.-Butyl-4,4-dimethylcyclohexanon, 3-Isopropyl-3,5,5-trimethylcyclohexanon, 4-Isopropyl-3,5,5-trimethylcyclohexanon, 3,3,5-Trimethyl-5-propylcyclohexanon, 3,5,5-Trimethyl-5-propyl-cyclohexanon, 2-Butyl-3,3,4-trimethylcyclopentanon, 2-Butyl-3,3,4-trimethylcyclohexanon, 4-Butyl-3,3,5-trimethylcyclohexanon, 3-Isohexyl-3-methylcyclohexanon, 5-Ethyl-2,4-diisopropyl-5-methylcyclohexanon und 3,3,8-Trimethylcyclooctanon.

Beispiele für bevorzugte Ketone sind 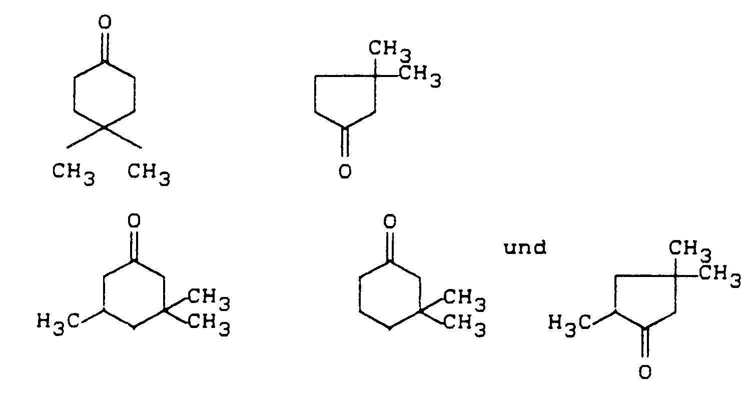
Zur Bisphenolherstellung werden im allgemeinen 2 bis 10 Mol, vorzugsweise 2,5 bis 6 Mol Phenol (V) pro Mol Keton (VI), verwendet. Bevorzugte Reaktionszeiten betragen 1 bis 100 Stunden. Im allgemeinen arbeitet man bei Temperaturen von -30°C bis 300°C, vorzugsweise von -15°C bis 150°C und bei Drücken von 1 bis 20 bar, vorzugsweise von 1 bis 10 bar.

Die Kondensation wird im allgemeinen in Gegenwart saurer Katalysatoren durchgeführt. Beispiele sind Chlorwasserstoff, Bromwasserstoff, Fluorwasserstoff, Bortrifluorid, Aluminiumtrichlorid, Zinkdichlorid, Titantetrachlorid, Zinntetrachlorid, Phosphorhalogenide, Phosphorpentoxid, Phosphorsäure, konzentrierte Salzsäure oder Schwefelsäure sowie Mischungen aus Essigsäure und Acetanhydrid. Die Verwendung saurer Ionenaustauscher ist ebenfalls möglich.

Die Umsetzung kann durch Zugabe von Co-Katalysatoren wie C₁-C₁₈-Alkyl-Mercaptanen, Schwefelwasserstoff, Thiophenolen, Thiosäuren und Dialkylsulfiden, bevorzugt in Mengen von 0,01-0,4 Mol/Mol Keton, insbesondere 0,05-0,2 Mol/Mol Keton, beschleunigt werden.

Die Kondensation kann ohne Lösungsmittel oder in Gegenwart eines inerten Lösungsmittels (z.B. aliphatischer und aromatischer Kohlenwasserstoff, Chlorkohlenwasserstoff) durchgeführt werden.

Nur wenn der Katalysator nicht gleichzeitig als wasserentziehendes Mittel fungiert, ist es empfehlenswert, zusätzlich wasserentziehende Mittel einzusetzen, um hohe Umsätze zu erzielen.

Geeignete wasserentziehende Mittel sind beispielsweise Acetanhydrid, Zeolithe, Polyphosphorsäure und Phosphorpentoxid.

Der Erfindung liegt die Erkenntnis zugrunde, daß die Verwendung kleiner Mengen der Dihydroxydiphenylcycloalkane der Formel (I) als Comonomere bei der Herstellung aromatischer Polycarbonate an Diphenolen die Verarbeitungsstabilität der Polymeren verbessert.

Gegenstand der vorliegenden Erfindung sind somit thermoplastische, aromatische Polycarbonate mit Molekulargewichten M̅w (Gewichtsmittel) von mindestens 8.000, vorzugsweise von 10.000 bis 250.000 und insbesondere von 16.000 bis 90.000, von Diphenolen der Formel (VII) und 0,01 bis 1,99 % (bezogen auf gesamte Diphenole) solchen der Formel (I).

Geeignete Diphenole der Formel (VII)

HO-Z-OH

sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (I) oder Heteroatome als Brückenglieder enthalten kann.

Beispiele für Diphenole der Formel (VII) sind Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α′-Bis-(hydroxyphenyl)-diisopropylbenzole
sowie deren kernalkylierte und kernhalogenierte Verbindungen.

Diese und weitere geeignete Diphenole der Formel (VII) sind z.B. in den US-PS 3 028 365, 2 999 835, 3 148 172, 3 275 601, 2 991 273, 3 271 367, 3 062 781, 2 970 131 und 2 999 846, in den DE-OS 1 570 703, 2 063 050, 2 063 052, 2 211 0956, der FR-PS 1 561 518 und in "H. Schnell, Chemistry and Physics of Polycarbonates, Interscience Publishers, New York 1964", beschrieben.

Bevorzugte andere Diphenole sind beispielsweise:
4,4′-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α′-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α′-Bis-(3,5-dimethyl-4-hydroxyphenyl)-p-diisopropylbenzol,
2,2-Bis-(3,5-dichlor-4-hydroxyphenyl)-propan und
2,2-Bis-(3,5-dibrom-4-hydroxyphenyl)-propan.

Besonders bevorzugte Diphenole der Formel (VII) sind:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-cyclohexan.

Insbesondere ist 2,2-Bis-(4-hydroxyphenyl)-propan bevorzugt.

Die Diphenole der Formel (VII) können sowohl einzeln als auch im Gemisch eingesetzt werden.

Das molare Verhältnis von Dihydroxydiphenylcycloalkanen der Formel (I) zu den Diphenolen der Formel (VII), ist 1,99 Mol-% (I) zu 98,01 Mol-% (VII) bis 0,01 Mol-% (I) zu 99,99 Mol-% (VII), vorzugsweise 1,8 Mol-% (I) zu 98,2 Mol-% (VII) bis 0,1 Mol-% (I) zu 99,9 Mol-% (VII) und insbesondere 1,7 Mol-% (I) zu 98,3 Mol-% (VII) bis 0,2 Mol-% (I) zu 99,5 Mol-% (VII) und ganz besonders 1,5 Mol-% (I) zu 98,5 Mol-% (VII) bis 0,4 Mol-% (I) zu 99,6 Mol-% (VII).

Insbesondere sind Gegenstand der vorliegenden Erfindung somit thermoplastische, aromatische Polycarbonate mit Molekulargewichten M̅w (Gewichtsmittel) von mindestens 8.000, vorzugsweise von 10.000 bis 250.000 und insbesondere von 16.000 bis 90.000, die bifunktionelle Struktureinheiten der Formel (Ia) 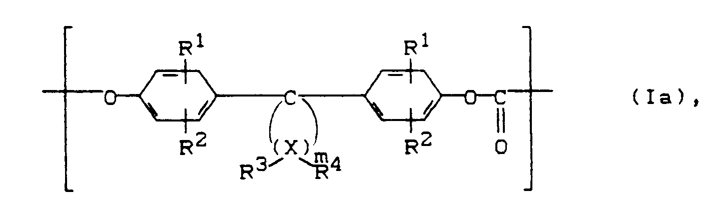
worin
X, R¹, R², R³, R⁴ und m die für die Formel (I) genannte Bedeutung haben, in Mengen von 0,01 Mol-% bis 1,99 Mol-%, vorzugsweise 0,1 Mol-% bis 1,8 Mol-%, insbesondere 0,2 Mol-% bis 1,7 Mol-% und ganz besonders 0,4 Mol-% bis 1,5 Mol-%, bezogen jeweils auf die Gesamtmenge von Carbonatstruktureinheiten enthalten.

Die erfindungsgemäßen Co-Polycarbonate enthalten jeweils zu 100 Mol-% komplementäre Mengen an Carbonatstruktureinheiten der Formel (VIIa) 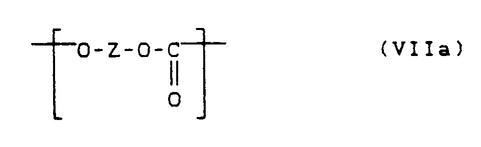
worin Z die obengenannte Bedeutung hat.

Bevorzugter Gegenstand der Erfindung sind Co-Polycarbonate, in denen in den Struktureinheiten der Formel (Ia) m = 4 oder 5 und ganz besonders solche mit Struktureinheiten der Formel (Ic) 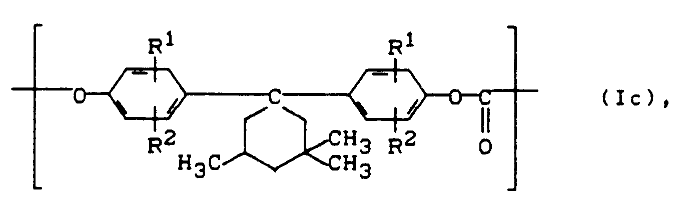
worin
R¹ und R² die für Formel (Ia) genannte Bedeutung haben, besonders bevorzugt aber Wasserstoff sind.

Gegenstand der vorliegenden Erfindung ist auch die Verwendung der Dihydroxydiphenylcycloalkane der Formel (I) in kleinen Mengen bei der Herstellung von hochmolekularen thermoplastischen, aromatischen Co-Polycarbonaten mit verbesserter Verarbeitungsstabilität.

Die hochmolekularen Co-Polycarbonate aus den Dihydroxydiphenylcycloalkanen der Formel (I) und Diphenolen der Formel (VII) können nach den bekannten Verfahren zur Herstellung von Polycarbonaten hergestellt werden. Dabei können die verschiedenen Diphenolreste statistisch oder blockweise im Polymeren angeordnet sein.

Gegenstand der Erfindung ist somit auch ein Verfahren zur Herstellung von hochmolekularen thermoplastischen, aromatischen Co-Polycarbonaten aus Diphenolen, Dihydroxydiphenylcycloalkanen der Formel (I), gegebenenfalls Kettenabbrechern und gegebenenfalls Verzweigern in an sich bekannter Weise, vorzugsweise durch Phasengrenzflächenpolykondensation, in welchem Dihydroxydiphenylcycloalkane der Formel (I) in Mengen von 0,01 Mol-% bis 1,99 Mol-%, vorzugsweise von 0,1 Mol-% bis 1,8 Mol-%, insbesondere von 0,2 Mol-% bis 1,7 Mol-% und ganz besonders von 0,4 Mol-% bis 1,5 Mol-%, bezogen auf die Gesamtmolmenge Diphenolen, einkondensiert werden.

Als Kettenabbrecher zur Regelung des Molekulargewichts können in bekannter Weise monofunktionelle Verbindungen in üblichen Konzentrationen erwünscht werden. Geeignete Verbindungen sind z.B. Phenol, tert.-Butylphenole oder andere Alkyl-C₁-C₇-substituierte Phenole. Insbesondere sind kleine Mengen Phenole der Formel (VIII) geeignet 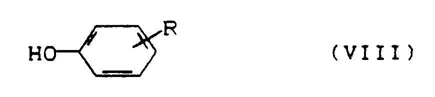
worin R einen verzweigten C₈- und/oder C₉-Alkylrest darstellt.

Bevorzugt ist im Alkylrest R der Anteil an Protonen in CH₃-Gruppen 47 bis 89 % und der Anteil an Protonen in CH- und CH₂-Gruppen 53 bis 11 %; bevorzugt ist R in o-und/oder p-Stellung zur OH-Gruppe, und besonders bevorzugt ist der Anteil an ortho-Verbindungen höchstens 20 Gew.-%. Die Kettenabbrecher werden im allgemeinen in Mengen von 0,5 bis 10, bevorzugt 1,5 bis 8 Mol-%, bezogen auf gesamte Diphenole, eingesetzt.

Als Verzweiger können geringe Mengen, vorzugsweise Mengen von 0,05 bis 2,0 Mol-% (bezogen auf eingesetzte Diphenole), drei oder mehr als dreifunktionelle Verbindungen, insbesondere solche mit drei oder mehr als drei phenolischen Hydroxylgruppen, verwendet werden. Einige geeignete Verzweiger mit drei oder mehr als drei phenolischen Hydroxylgruppen sind
Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4-hydroxyphenyl-isopropyl)-phenol,
2,6-Bis-(2-hydroxy-5′-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-orthoterephthal-säureester, Tetra-(4-hydroxyphenyl)-methan,
Tetra-(4-(4-hydroxyphenyl-isopropyl)-phenoxy)-methan und
1,4-Bis-((4′-,4˝-dihydroxytriphenyl)-methyl)-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)2-oxo-2,3-dihydroindol.

Die erfindungsgemäßen Polycarbonate können vorzugsweise durch Phasengrenzflächenkondensation (vgl. H. Schnell, "Chemistry and Physics of Polycarbonates", Polymer Reviews, Vol. IX, Seite 33 ff., Interscience Publ., 1964) in an sich bekannter Weise hergestellt werden. Hierbei werden erfindungsgemäß neben der Formel (VII), solche der Formel (I) in kleinen Mengen eingesetzt. Zur Regulierung des Molekulargewichtes können Kettenabbrecher z.B. der Formel (VII) zugegeben werden. Dann wird in Gegenwart einer inerten, vorzugsweise Polycarbonat lösenden, organischen Phase mit Phosgen nach den Regeln der Phasengrenzflächenpolykondensation umgesetzt. Die Reaktionstemperatur ist 0° C bis 40° C.

Die gegebenenfalls mitverwendeten 0,05 bis 2 Mol-% Verzweiger können entweder mit den Diphenolen in der wäßrig alkalischen Phase vorgelegt werden oder in dem organlschen Lösungsmittel gelöst vor der Phosgenierung zugegeben werden.

Neben den Diphenolen der Formel (I) und denen der Formel (VII) können auch deren Mono- und/oder Bischlorkohlensäureester verwendet werden, wobei diese in organischen Lösungsmitteln gelöst zugegeben werden. Bei Beisatz von Chlorkohlensäureestern kann die Phsogenmenge entsprechend reduziert werden.

Geeignete organische Lösungsmittel für die Kettenabbrecher, gegebenenfalls die Verzweiger und die Chlorkohlensäureester sind beispielsweise Methylenchlorid, Chlorbenzol, Aceton, Acetonitril sowie Mischungen daraus, insbesondere Mischungen aus Methylenchlorid und Chlorbenzol. Gegebenenfalls können die verwendeten Kettenabbrecher und Verzweiger im gleichen Solvens gelöst werden.

Als organische Phase für die Phasengrenzflächenpolykondensation dient beispielsweise Methylenchlorid, Chlorbenzol sowie Mischungen aus Methylenchlorid und Chlorbenzol.

Als wäßrige alkalische Phase dient beispielsweise wäßrige NaOH-Lösung.

Die Herstellung der erfindungsgemäßen Polycarbonate durch Phasengrenzflächenpolykondensation kann in üblicher Weise z.B. mit tertiären Aminen, insbesondere tertiären aliphatische Aminen wie Tributylamin oder Triethylamin katalysiert werden; die Katalysatoren können in Mengen von 0,05 bis 10 Mol-%, bezogen auf Mole eingesetzte Diphenole verwendet werden. Die Katalysatoren können vor Beginn, während oder auch nach der Phosgenierung zugesetzt werden.

Die erfindungsgemäßen hochmolekularen, thermoplastischen, aromatischen Polycarbonate können auch nach dem bekannten Verfahren in homogener Phase, dem sogenannten "Pyridinverfahren" sowie nach dem bekannten Schmelzumesterungsverfahren unter Verwendung von beispielsweise Diphenylcarbonat anstelle von Phosgen hergestellt werden. Auch hier werden die erfindungsgemäßen Polycarbonate in bekannter Weise isoliert.

Die erfindungsgemäß erhältlichen Polycarbonate können in bekannter Weise isoliert werden, indem man die bei der Phasengrenzflächenpolykondensation erhaltenen organischen Phase abgetrennt, neutral und elektrolytfrei wäscht und dann das Polymer beispielsweise mit einem Eindampfextruder als Granulat isoliert.

Den erfindungsgemäßen Co-Polycarbonaten können vor oder während ihrer Verarbeitung die für thermoplastische Polycarbonate üblichen Additive wie Stabilisatoren, Entformungsmittel, Pigmente, Flammschutzmittel, Antistatika, Füllstoffe und Verstärkungsstoffe in den üblichen Mengen zugsetzt werden.

Im einzelnen können beispielsweise Ruß, Kieselgur, Kaolin, Tone, CaF₂, CaCO₃, Aluminiumoxide, Glasfasern und anorganische Pigmente sowohl als Füllstoffe als auch als Nucleierungsmittel zugesetzt werden, sowie als Entformungsmittel beispielsweise Glycerinstearate, Pentaerythrittetrastearat und Trimethylolpropentristearat.

Die erfindungsgemäßen Polycarbonate können zu Formkörpern verarbeitet werden, indem man beispielsweise die in bekannter Weise isolierten Polycarbonate zu Granulat extrudiert und dieses Granulat gegebenenfalls nach Zusatz der obengenannten Additive durch Spritzguß zu verschiedenen Artikeln in bekannter Weise verarbeitet.

Die erfindungsgemäßen Polycarbonate sind als Formkörper überall dort einsetzbar, wo die bislang bekannten Polycarbonate eingesetzt wurden, also im Elektrosektor sowie im Bausektor für Abdeckungen und Verglasungen, und zwar dann, wenn gute Verarbeitbarkeit und bessere Eigenfarbe gefordert werden.

In den nachfolgenden Beispielen 2 bis 4 wird die relative Viskosität gemessen an 0,5 Gew.-%igen Lösung des Polycarbonats in CH₂Cl₂.

### Beispiel 1

### Herstellung von 1,1-Bis(4-Hydroxyphenyl)-3,3,5-trimethylcyclohexan

In einem 1 l-Rundkolben mit Rührer, Tropftrichter, Thermometer, Rückflußkühler und Gaseinleitungsrohr werden 7,5 Mol (705 g) Phenol und 0,15 Mol (30,3 g) Dodecylthiol vorgelegt und bei 28 bis 30° C mit trockenem HCl-Gas gesättigt. Zu dieser Lösung werden innerhalb von 3 Stunden eine Lösung von 1,5 Mol (210 g) Dihydroisophoron (3,3,5-Trimethyl-cyclohexan-1-on) und 1,5 Mol (151 g) Phenol zugetropft, wobei weiter HCl-Gas durch die Reaktionslösung geleitet wird. Nach beendeter Zugabe leitet man noch 5 Stunden lang HCl-Gas ein. Man läßt 8 Stunden bei Zimmertemperatur nachreagieren. Anschließend wird das überschüssige Phenol durch Wasserdampfdestillation entfernt. Der verbleibende Rückstand wird zweimal mit Petrolether (60-90) und einmal mit Methylenchlorid heiß extrahiert und abfiltriert.
Ausbeute: 370 g
Schmelzpunkt: 205 bis 207° C

### Beispiel 2

### Herstellung eines Copolycarbonates

225,72 g (0,99 Mol) Bisphenol A und 3,10 g (0,01 Mol) des Diphenols gemäß Beispiel 1, 336 g (6 Mol) KOH und 5.600 g Wasser werden unter Inertgas unter Rühren gelöst. Dann fügt man eine Lösung von 8,2 g (4 Mol-%) Isooctylphenol in 5.600 g Methylenchlorid zu. In die gut gerührte Lösung wurden bei pH 13 bis 14 und bei 21 bis 25° C 198 g (2 Mol) Phosgen eingeleitet. Danach wird 1 ml Ethylpyridin zugegeben und noch 45 Minuten gerührt. Die bisphenolatfreie wäßrige Phase wird abgetrennt, die organische Phase nach Ansäuern mit Phsophorsäure mit Wasser neutral gewaschen und vom Lösungsmittel befreit. Das Polycarbonat zeigt eine relative Lösungsviskosität von 1,279.

### Beispiel 3

### Herstellung eines Copolycarbonates

223,46 g (0,9801 Mol) Bisphenol A und 6,17 g (0,0199 Mol) des Diphenols gemäß Beispiel 1, 336 g (6 Mol) KOH und 5.600 g Wasser werden unter Inertgas unter Rühren gelöst. Dann fügt man eine Lösung von 8,2 g (4 Mol-%) Isooctylphenol in 5.600 g Methylenchlorid zu. In die gerührte Lösung wurden bei pH 13 bis 14 und bei 21 bis 25° C 198 g (2 Mol) Phosgen eingeleitet. Danach wird 1 ml Ethylpyridin zugegeben und noch 45 Minuten gerührt. Die bisphenolatfreie wäßrige Phase wird abgetrennt, die organische Phase nach Ansäuern mit Phsophorsäure mit Wasser neutral gewaschen und vom Lösungsmittel befreit. Das Polycarbonat hat eine relative Lösungsviskosität von 1,282.

### Beispiel 4

### Vergleichsbeispiel

Polycarbonat aus Bisphenol A mit einer relativen Viskosität von 1,28.

### Bewertung:

Aus den Polycarbonaten wurden auf einer Spritzgußmaschine bei Massetemperaturen von 360° C und 390° C Plättchen der Größe 60 x 40 x 4 mm hergestellt. An diesen Plättchen wurden Transmissionsmessungen bei monochromatischer Probenbeleuchtung mit der Meßgeometrie O/d am Diano Match-Scan-Spektralphotometer gemäß DIN 5033 für die Normlichtart C/2 durchgeführt. Aus den so ermittelten Normfarbwerten X,Y,Z wurde der Yellowness-Index nach ASTM D-1925 errechnet. Die Ergebnisse sind in Tabelle 1 aufgeführt.

| Probenbezeichnung | Verspritztemperatur [°C] | Yellowness index |
|---|---|---|
| Copolycarbonat Beispiel 2 | 360 | 0,57 |
| Copolycarbonat Beispiel 2 | 390 | 0,75 |
| Copolycarbonat Beispiel 3 | 360 | 0,51 |
| Copolycarbonat Beispiel 3 | 390 | 0,71 |
| Vergleichsbeispiel 4 | 360 | 0,60 |
| Vergleichsbeispiel 4 | 390 | 0,77 |

Die erfindungsgemäßen Copolycarbonaten haben einen geringeren Yellownessindex.

## Patentansprüche

1. Aromatische Polycarbonate mit Molekulargewichten von mindestens 8.000 aus Diphenolen der Formel (VII)
HO-Z-OH
worin Z ein aromatischer Rest mit 6 bis 30 C-Atomen ist, und 0,01 bis 1,99 Mol-% (bezogen auf gesamte Diphenole) solchen der Formel (I) 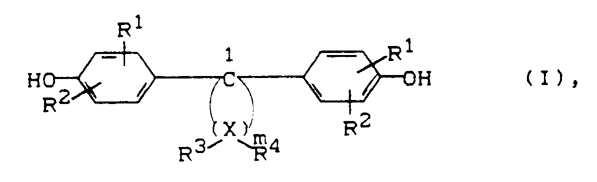 worin
R¹ und R² unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
m eine ganze Zahl von 4 bis 7, bevorzugt 4 oder 5,
R³ und R⁴, für jedes X individuell wählbar, unabhängig voneinander Wasserstoff oder C₁-C₆-Alkyl
und
X Kohlenstoff bedeuten,
mit der Maßgabe, daß an mindestens einem Atom X R³ und R⁴ gleichzeitig Alkyl bedeuten.

2. Aromatische Polycarbonate mit Molekulargewichten M̅w (Gewichtsmittel) von mindestens 8.000, die bifunktionelle Struktureinheiten der Formel (Ia) 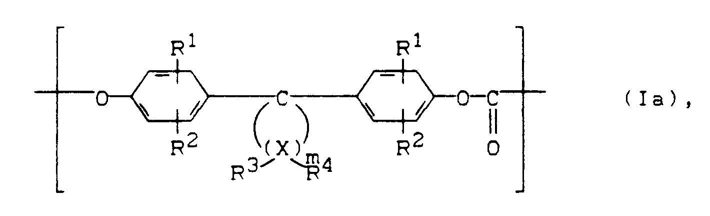 worin
X, R¹, R², R³, R⁴ und m die in Anspruch 1 für die Formel (I) genannte Bedeutung haben, in Mengen von 0,01 Mol-% bis 1,99 Mol-% und 99,99 bis 98,01 Mol-%, Struktureinheiten der Formel (VIIa) 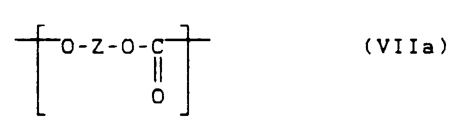 worin Z die in Anspruch 1 genannte Bedeutung hat, bezogen auf die Gesamtmenge an difunktionellen Carbonatstruktureinheiten ankondensiert enthalten.

3. Polycarbonate gemäß Anspruch 2, enthaltend Struktureinheiten der Formel (Ia) in Mengen von 0,1 Mol-% bis 1,5 Mol-%.

4. Polycarbonate gemäß Anspruch 2, in denen m 4 oder 5 ist.

5. Polycarbonate gemäß Anspruch 2, enthaltend Struktureinheiten der Formel (Ic) 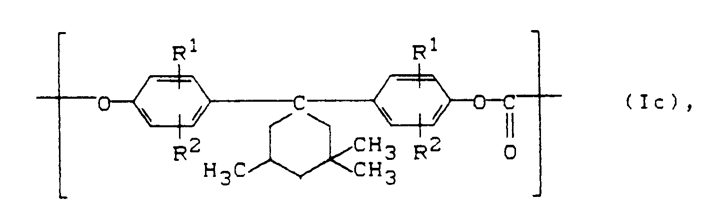 worin
R¹ und R² die für Formel (Ia) genannte Bedeutung haben.
bezogen auf die Gesamtmenge an difunktionellen Carbonatstruktureinheiten ankondensiert enthalten.

6. Polycarbonate gemäß Anspruch 5, worin in Formel (Ic) R¹ und R² = Wasserstoff sind.

7. Verfahren zur Herstellung von aromatischen Polycarbonaten, dadurch gekennzeichnet, daß man als Diphenole solche der Formel (I) des Anspruchs 1, in Mengen von 0,01 Mol-% bis 1,99 Mol-%, und solche der Formel (VII) des Anspruchs 1 in Mengen von 99,99 Mol-% bis 89,01 Mol-%, bezogen auf gesamte Diphenole, verwendet.

## Claims

1. Aromatic polycarbonates, having molecular weights of at least 8,000, composed of diphenols of the formula (VII)
HO-Z-OH
wherein Z is an aromatic radical having 6 to 30 C atoms, and from 0.01 to 1.99 mol-% (referred to total diphenols) is of the formula (I) 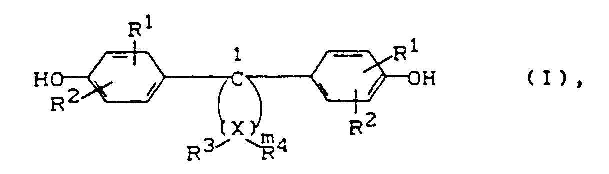 wherein
R¹ and R² independently of one another signify hydrogen, halogen, preferably chlorine or bromine, C₁-C₈ alkyl, C₅-C₆ cycloalkyl, C₆-C₁₀ aryl, preferably phenyl, and C₇-C₁₂ aralkyl, preferably phenyl-C₁-C₄ alkyl, in particular benzyl,
m signifies a whole number from 4 to 7, preferably 4 or 5,
R³ and R⁴, which can be selected for each X individually, independently of one another signify hydrogen or C₁-C₆ alkyl
and
X signifies carbon,
on condition that on at least one atom X, R³ and R⁴ at the same time signify alkyl.

2. Aromatic polycarbonates having molecular weights M̅w (weight average) of at least 8,000, which contain bifunctional structural units of the formula (Ia) 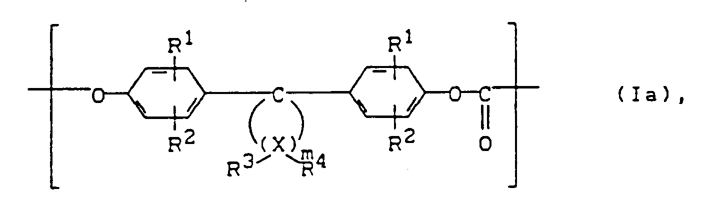 wherein
X, R¹, R², R³, R⁴ and m have the meanings given in claim 1 for the formula (I), in quantities of from 0.01 mol-% to 1.99 mol-%, and from 99.99 to 98.01 mol-% of structural units of the formula (VIIa) 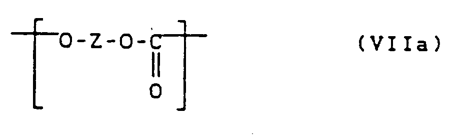 wherein Z has the meaning given in claim 1,
referred to the total quantity of difunctional carbonate structural units fused to one another.

3. Polycarbonates according to claim 2, containing structural units of the formula (Ia) in quantities of from 0.1 mol-% to 1.5 mol-%.

4. Polycarbonates according to claim 2, wherein m represents 4 or 5.

5. Polycarbonates according to claim 2, containing structural units of the formula (Ic) 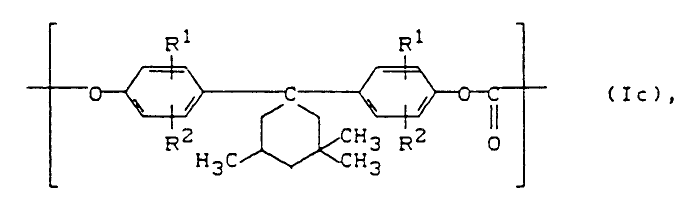 wherein
R¹ and R² have the meaning given for the formula (Ia),
referred to the total quantity of difunctional carbonate structural units fused to one another.

6. Polycarbonates according to claim 5, wherein in formula (Ic) R¹ and R² equal hydrogen.

7. Method for the preparation of aromatic polycarbonates, characterised in that the diphenols used are those having the formula (I) of claim 1, in quantities of from 0.01 mol-% to 1.99 mol-%, and those having the formula (VII) of claim 1 in quantities of from 99.99 mol-% to 98.01 mol-%, referred to total diphenols.

## Revendications

1. Polycarbonates aromatiques, ayant des poids moléculaires d'au moins 8 000, de diphénols de formule (VII)
HO-Z-OH
dans laquelle Z représente un radieal aromatique en C₆-C₃₀, et de 0,01 à 1,99 mol% (par rapport aux diphénols totaux) de diphénols de formule (I) 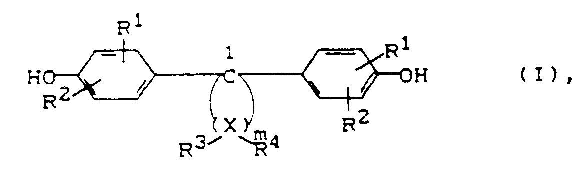 dans laquelle
R¹ et R² représentent chacun, indépendamment l'un de l'autre, l'hydrogène, un halogène, de préférence le chlore ou le brome, un groupe alkyle en C₁-C₈, cycloalkyle en C₅-C₆, aryle en C₆-C₁₀, de préférence phényle, ou aralkyle en C₇-C₁₂, de préférence phényl-alkyle en C₁-C₄, plus spécialement benzyle,
m est un nombre entier allant de 4 à 7 et de préférence égal à 4 ou 5,
R³ et R⁴ qui peuvent être choisis indépendamment pour chacun des atomes X, représentent chacun, indépendamment l'un de l'autre, l'hydrogène ou un groupe alkyle en C₁-C₆, et
X représente le carbone,
sous réserve que, sur au moins un atome X, R³ et R⁴ représentent tous deux des groupes alkyles.

2. Polycarbonates aromatiques de poids moléculaire M̅w (moyenne en poids) au moins 8 000, qui contiennent à l'état condensé des motifs de structure bifonctionnels de formule (Ia) : 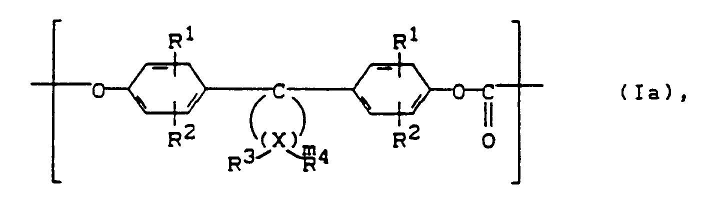 dans laquelle
X, R¹, R², R³, R⁴ et m ont les significations indiquées dans la revendication 1 en référence à la formule (I), en quantité de 0,01 mol% à 1,99 mol%, et de 99,99 à 98,01 mol% de motifs de structure de formule (VIIa) 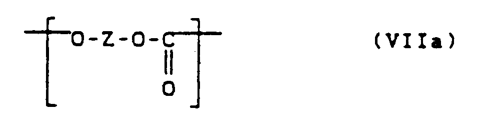 dans laquelle Z a les significations indiquées dans la revendication 1,
par rapport à la quantité totale des motifs de structure difonctionnels de carbonates.

3. Polycarbonates selon la revendication 2, contenant les motifs de structure de formule (Ia) en quantité de 0,1 mol% à 1,5 mol%.

4. Polycarbonates selon la revendication 2, pour lesquels m est égal à 4 ou 5.

5. Polycarbonates selon la revendication 2, contenant des motifs de structure de formule (Ic) : 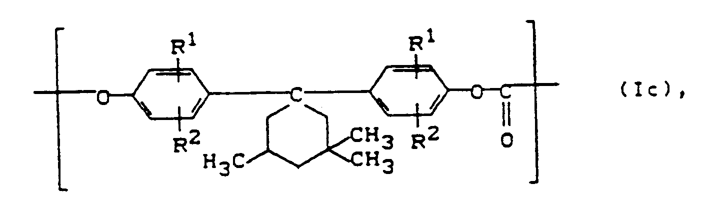 dans laquelle
R¹ et R² ont les significations indiquées en référence à la formule (Ia),
à l'état condensé, et par rapport à la quantité totale des motifs de structure difonctionnels de carbonates.

6. Polycarbonates selon la revendication 5, pour lesquels, dans la formule (Ic), R¹ et R² représentent l'hydrogène.

7. Procédé de préparation de polycarbonates aromatiques, caractérisé en ce que l'on utilise en tant que diphénols les diphénols de formule (I) de la revendication 1 en quantité de 0,01 mol% à 1,99 mol% et des diphénols de formule (VII) de la revendication 1 en quantité de 99,99 mol% à 89,01 mol% par rapport aux diphénols totaux.
